Europäisches Patentamt

European Patent Office

Office européen des brevets

(11) Publication number : **0 485 160 A1**

# (12) EUROPEAN PATENT APPLICATION

(21) Application number : **91310207.5**

(22) Date of filing : **05.11.91**

(51) Int. Cl.⁵ : **F16J 15/02, F16J 15/28**

(30) Priority : **05.11.90 GB 9024026**

(43) Date of publication of application :
**13.05.92 Bulletin 92/20**

(84) Designated Contracting States :
**AT BE CH DE DK ES FR GB GR IT LI LU NL SE**

(71) Applicant : **NICHOLSON SEALS LIMITED**
**Hamsterley**
**Newcastle-Upon-Tyne NE 17 7SX (GB)**

(72) Inventor : **Scott, Thomas William**
**308 Silver Lonnen**
**Denton Burn, Newcastle-Upon-Tyne NE5 2HJ**
**(GB)**

(74) Representative : **Lawson, David Glynne**
**MARKS & CLERK 57-60 Lincoln's Inn Fields**
**London WC2A 3LS (GB)**

(54) **Seal.**

(57)   A seal comprising a resilient sheet metal ring
of which the radial cross-section is hollow and
has a profile which consists of three lobes 21,
23 with a gap 27 between the sides of the lateral
lobes 21 remote from the intermediate lobe 23
to permit movement of the lateral lobes resiliently towards and away from one another. A
set of rings 5 may be disposed in a stack
between and in radial contact with radially inner
and outer members 1, 3 to be sealed, and
subjected to pressure in a direction generally
parallel to the ring axes ; at least one male ring
element 7 extends axially into the gap 27 and
has a radial extent greater than that of the said
gap whereby under axial pressure, the male
element forces the radially inner and outer
lobes radially apart, into contact with the inner
and outer enclosing walls.

FIG.1

EP 0 485 160 A1

This invention relates to seals, in particular to dynamic seals for use in gland boxes and in similar circumstances, for example to provide sealing between a valve stem, shaft or similar member and a housing.

According to one aspect of the present invention, a seal is provided comprising a resilient ring of which the radial cross-section is hollow and has a profile which consists essentially of lobes namely at least one lateral lobe disposed on each opposite side of the said profile, and at least one intermediate lobe between the lateral lobes, a gap being provided in the ring material between the sides of the lateral lobes remote from the intermdiate lobe(s) to permit movement of the lateral lobes resiliently towards and away from one another.

Preferably there is a single intermediate lobe and a single lateral lobe in each side viz three lobes in all.

Seal rings of such profile can be used as shaft seals for example in gland boxes, with the intermediate lobe or lobes extending in the axial direction.

Preferably, the lobes are essentially symmetrical relative to a median axis of the cross-section.

The lobes are preferably of arcuate externally convex form, preferably, circular arcs.

According to another aspect of the invention, a seal comprises a set of rings made of sheet metal or other resilient material, adapted to be disposed in a stack between and in radial contact at their radially inner and outer surfaces with radially inner and outer members to be sealed, and subjected to pressure in a direction generally parallel to the ring axes; the stack comprises at least one said ring of which the radial cross-section is hollow and of which the profile consists essentially of three regions namely a radially inner region, a radially outer region, and an axially projecting region interconnecting these at one axial extremity of each, the other axial extremities of the inner and outer regions being radially spaced apart; and at least one male ring element extending axially into the said spacing between the said radially inner and outer regions and having a radial extent greater than that of the said spacing whereby under axial pressure, the male element forces the said radially inner and outer regions radially apart, into contact with the radially inner and outer enclosing walls.

In a preferred arrangement, each said region is a lobe of a ring shaped in accordance with the aforesaid first aspect of the invention. As a consequence, in a stack of identical rings, the male lobe of one ring will, under axial pressure, enter the said spacing of the next adjacent ring and force radially apart the radially inner and outer lobes of the latter ring.

The stack may consist only of identical rings. Alternatively, at that end of the stack at which a said radial spacing is exposed, a male adaptor ring may be provided, consisting of a projection analogous to the male axially projecting regions of the rings but lacking the radial inner and outer regions provided on the other ring or rings of the stack.

The seal assembly may comprise a single ring provided with said regions or lobes and a male adaptor ring.

The seal is energized by mechanical pressure applied in the axial direction to the extremities of the stack. However, because of the spacing provided between the radial regions, a fluid which is being sealed can enter the interior space within each ring, and if this fluid is under pressure, the fluid pressure will tend to expand the ring, forcing its radial regions into contact with the radially enclosing walls, enhancing the sealing effect by pressure energization.

Also according to the present invention, a seal ring having the previously described 3-region, preferably 3-lobed, profile can be used individually under radial compression of the radial lobes.

According to yet another aspect of the invention, a seal ring has a 3-region or 3-lobe hollow open profile as set forth above however the two lateral regions or lobes extend in the axial direction of the ring and the intermediate region or lobe interconnecting these extends in a radial direction of the ring. In general, the intermediate or third region or lobe extends radially outwardly, and the seal ring has its opening (the spacing between the lateral regions or lobes) facing radially inwardly.

Such a seal ring can be used as a static seal eg a flange seal or groove seal under axial compression. As the interior of the seal ring will in use usually be exposed to the pressure medium being sealed, the seal ring will also be pressure-energized.

Seal rings embodying the invention are illustrated in the accompanying drawings, in which:

Figure 1 illustrates a gland seal embodying the invention;

Figure 2 shows preferred proportions of the profile of a seal ring shown in Figure 1; and

Figures 3 and 4 show alternative ring profiles.

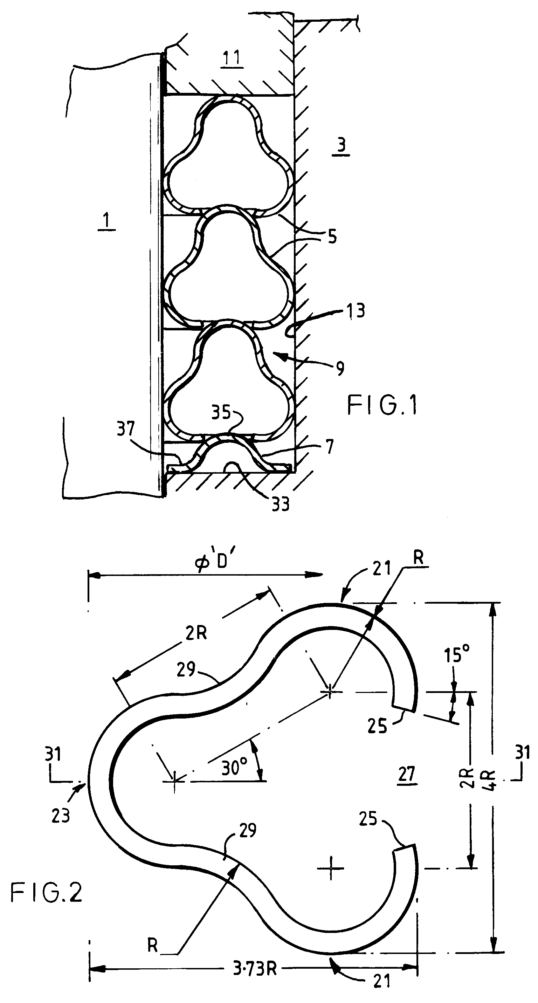

Figure 1 shows a shaft seal, between a shaft 1 and a gland box or housing 3. The shaft is for example a valve stem; it may be stationary, or subject to rotations and/or longitudinal movement eg reciprocation.

The seal consists of a stack of identical sheet metal seal rings 5 and a base male adaptor 7, accommodated in a radial clearance within the gland box, between a shoulder or seat 9 and a gland cover 11 by which the stack is subjected to loading in the axial direction. The axial compression causes the stack to expand sideways (radially) into contact with the external surface of the valve stem and the internal circumferential surface 13 of the gland seat 9.

Figure 2 shows a preferred profile of an individual sealing ring. This is composed of sheet metal of uniform thickness, shaped to a symmetrical profile comprising two lateral lobes 21 and an intermediate or central lobe 23 which interconnects respective ends of the lobes 21. The other ends 25 of the lobes 21 are spaced apart by a gap 27.

In the illustrated embodiment, each lobe has a cross-section which is a circular extending over substantially 180° and convex towards the exterior, with respective transition regions 29 connecting each lateral lobe 21 to a respective end of the intermediate lobe 23. These transition regions are also circular arcs, which are concave towards the exterior.

The width of the gap 27 is somewhat less than the external width of at least the wider portion of the lobe 23 adjacent the transition regions, as can be seen clearly in Figure 1.

Figure 2 also shows the preferred proportions of the lobes, but it is to be understood that the invention is in no way limited to these particular proportions.

In the preferred form shown in Figure 2, the centres of the circular arcs of the three lobes lie at the corners of an equilateral triangle, the length of the sides of which is equal to the external diameter of each lobe. The internal surface of each transition region 29 has a radius equal to the radius of the external surface of each of the lobes.

The gland seal shown in Figure 1 consists of three rings 5 stacked axially. In this case, the axis of symmetry 31 (Figure 2) of the cross-sectional profile of each ring is parallel to the axis of the valve stem 1 and of the stack of rings. Thus, the gap 27 between the lateral lobes of one ring rests on the central lobe 23 of the next lower ring. Under the axial pressure exerted by the gland cover 11, the central lobe 23 of a lower ring, acting as a male member, is forced into the gap 27 between the lateral lobes 21 of the next upper ring, these lobes acting as a female member. The lobes 21 are thereby forced apart, into radial contact with the surface of the valve stem and the gland box surface 13 forming circumferential lines of sealing contact.

The lowest ring of the stack may rest directly on the bottom surface or shoulder 33 of the seat 9. Preferably, however, a male adaptor 7 is placed between the stack of rings and the surface 33. This consists of a sheet metal ring with- a cross-sectional profile consisting of a single upwardly projecting convex lobe 35 corresponding generally to the lobes 23 of the rings, and integral radially inner and outer flanges 37 which rest on the surface 33. The male adaptor 7 provides a more stable stack and also ensures that the lowest seal ring is caused to expand at its lobes 21; in the absence of the male adaptor, the shape of the lobes 21 is such that axial pressure could tend to cause these lobes to move towards one another instead of outwards away from one another, impairing the sealing at the lobes 21 of the lowest seal ring.

The free end regions of the lateral lobes are re-entrant. That is to say, the free ends 25 extend past positions level with the centres of curvature of the respective lateral lobes, by 15° in the case illustrated in Figure 2. As a result, the lateral lobes present smoothly curved convex surfaces to the base of the stack, and the angle between the surfaces of these end regions and the contacting external surfaces of the central lobe 23 are reduced (as will be evident from inspection of Figure 1), rendering the stack more stable and facilitating engagement and penetration by the central lobe 23 in the gap 27 of an adjacent ring. However it is not essential that the free end regions of the lateral lobes be re-entrant in the described manner, provided that the gap between them is smaller than a lateral width of the central lobe 23, in order to provide the described wedging and expanding action when the stack of rings is compressed axially.

The described shaft or stem seal is, thus, mechanically energized by the applied axial pressure. A spring or springs, eg a helical compression spring, may be provided at one or both ends of the stack, eg under the male adaptor, to pre-load the seal.

Additionally, it will be seen that the interior spaces within the rings can communicate with the ambient fluid which is being sealed, and accordingly this fluid can enter within each seal ring and its pressure will then tend to force the lobes 21 away from one another, producing a pressure-energized seal effect.

The dimensions and shapes of the seal and of the individual rings can be varied, to suite changes in size of the housing and of the stem or shaft. It is however important that the relationship between the relationship between the width of the gap 27 and the shape and size of the central male lobe 23 be such that the latter will, under axial pressure, force the lobes 21 apart.

For easy entry of the lobe 23 into the gap 27, the lobe 23 should be curved as shown, tapered or otherwise suitably shaped to provide a lead-in or wedge configuration.

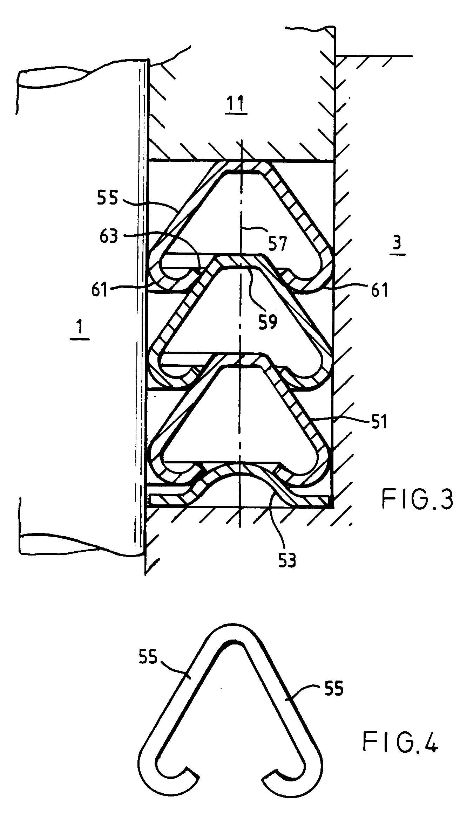

Instead of the 3-lobed profile shown in Figures 1 and 2, the seal ring may have a profile more in the form of a wedge or arrowhead, as shown by way of example in Figures 3 and 4.

Figure 3 shows a gland seal analogous to that of Figure 1, with a stack of three sheet metal seal rings 51 and a male adaptor ring 53 at the base of the stack.

Each of the rings 51 has a profile which consists of two rectilinear limbs 55 which converge towards the medium axis of symmetry 57 of the profile and are interconnected at their closer ends by a rectilinear region 59 laying in a plane perpendicular to the axis of symmetry. The other ends of the limbs 55, that is to say the more widely spaced free ends, are curved inwardly towards the axis of symmetry to form convex radially inner and outer extremities 61 of which the free ends 63 are re-entrant into the interior of the ring profile.

Preferably, the free ends 63, converge towards the medium axis of symmetry with an included angle less than or not substantially greater than the included angle between the limbs 55.

In the stack, a flat end region 59 and adjacent end regions of the limbs 55 form a male region of the ring profile, which penetrates the gap between the free end regions 63 and arcuate regions 61 acting as a female element. Consequently, under axial pressure, the aforesaid male regions urge the convex lateral regions apart into firm contact with the internal surface of the gland box or housing 3 and the external surface of the stem or shaft 1, in a manner analogous to the behaviour of the stack shown in Figure 1.

Other seal ring cross-sectional profiles can be used, provided that the profile includes a male region, engageable in a gap between a pair of lateral regions for expanding the latter radially, under axial pressure. It is preferred, but not essential, that the lateral regions be smoothly convex.

Figure 4 shows a modification of the ring profile shown in Figure 3, in which the limbs 55 meet, the flat region 59 being eliminated.

Seal rings embodying the invention can be made of any suitable resilient material, preferably sheet metal, for example stainless steel, Inconel (trademark), Nimonic (trademark). The material :an be work-hardened, age-hardened, fully heat-treated, or treated in any other suitable way.

By way of example only, a seal ring for gland sealing as illustrated in Figure 1, made of Inconel 718 may be made of sheet material of thickness 0.010 inches, internal diameter 1.871 inches, and with a lobe radius to the external surface of 0.063 inches corresponding to an overall height of 0.235 inches, the female gap having a width of approximately 0.09 inches and the external diameter of the male lobe being 0.126 inches.

The seal ring can be surface treated or plated, for example plated with silver, nickel, gold, copper, lead, indium or other suitable surface material. Alternatively or additionally, it may be coated with low-friction material for example PTFE, molybdenum disulphide.

**Claims**

1. A seal comprising a resilient ring of which the radial cross-section is hollow and has a profile which consists essentially of lobes namely at least one lateral lobe disposed on each opposite side of the said profile, and at least one intermediate lobe between the lateral lobes, a gap being provided in the ring material between the sides of the lateral lobes remote from the intermdiate lobe(s) to permit movement of the lateral lobes resiliently towards and away from one another.

2. The seal claimed in claim 1, having a single intermediate lobe and a single lateral lobe on each side.

3. The seal claimed in claim 1 or 2 wherein the intermediate lobe or lobes extend in the axial direction of the ring.

4. The seal claimed in claim 1 or 2 wherein the intermediate lobe or lobes extend in the radial direction of the ring.

5. The seal claimed in claim 1, 2, 3 or 4 in which the lobes are essentially symmetrical relative to a median axis of the cross-section.

6. The seal claimed in claim 1, 2, 3, 4 or 5 in which the lobes are of arcuate externally convex form.

7. A seal assembly comprising a set of rings made of resilient material, adapted to be disposed in a stack between and in radial contact at their radially inner and outer surfaces with radially inner and outer members to be sealed, and subjected to pressure in a direction generally parallel to the ring axes; at least one said ring of said stack having a radial cross-section which is hollow and of which the profile consists essentially of three regions namely a radially inner first region, a radially outer second region, and an axially projecting third region interconnecting these at one axial extremity of each of the first and second regions, the other axial extremities of the first and second regions being radially spaced apart; and at least one male ring element extending axially into the said spacing between the said first and second regions and having a radial extent greater than that of the said spacing whereby under axial pressure, the male element forces the said radially inner and outer regions radially apart, into contact with the said radially inner and outer members.

8. The seal claimed in claim 7 in which each said region is a lobe of a ring shaped in accordance with any of claims 1 to 5 of identical rings.

9. The seal assembly claimed in claim 7 or 8 in which the stack consists only of identical rings.

10. The seal assembly claimed in claim 7 or 8 in which, at that end of the stack at which a said radial spacing is exposed, a male adaptor ring is provided, consisting of a protection analogous to the said male axially protecting regions of the said ring or rings but lacking the radial inner and outer regions provided on the other ring or rings of the stack.

11. The seal assembly of claim 10, comprising a single said ring provided with said regions or lobes and a said male adaptor ring.

12. A seal or seal assembly as claimed in any of claims 1 to 11, made of resilient sheet metal.

13. A seal or seal assembly substantially as herein described with reference to any of the figures of the accompanying drawings.

FIG.1

FIG.2

FIG.3

FIG.4

European Patent
Office

# EUROPEAN SEARCH REPORT

Application Number

EP 91 31 0207

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 302 020 (MORALES)<br>* Whole document *<br>--- | 1-3,5-8<br>,10-12 | F 16 J 15/02<br>F 16 J 15/28 |
| A | DE-C- 215 362 (OPTISCHE ANSTALT)<br>* Whole document *<br>--- | 1-3,5,7<br>,12 | |
| A | DE-A-2 034 927 (TEMPER)<br>* Whole document *<br>----- | 1,4 | |

TECHNICAL FIELDS
SEARCHED (Int. Cl.5)

F 16 J

The present search report has been drawn up for all claims

| Place of search | Date of completion of the search | Examiner |
|---|---|---|
| THE HAGUE | 19-02-1992 | LEGER M.G.M. |

EPO FORM 1503 03.82 (P0401)